# EUROPEAN PATENT APPLICATION

(11) **EP 3 297 361 A1**
(43) Date of publication of application: **21.03.2018**
(21) Application number: 16796397.4
(22) Date of filing: 12.05.2016
(51) Int. Cl.: H04W 72/04, H04W 48/18, H04W 72/14

(54) **USER EQUIPMENT, AND MAC CONTROL ELEMENT TRANSMISSION METHOD**

(30) Priority: 15.05.2015 JP 2015100562
(71) Applicant: NTT DOCOMO, INC., Chiyoda-ku Tokyo 100-6150 (JP)
(72) Inventor: UCHINO, Tooru, Tokyo 100-6150 (JP); TAKEDA, Kazuki, Tokyo 100-6150 (JP); TAKAHASHI, Hideaki, Tokyo 100-6150 (JP)
(74) Representative: Hoffmann Eitle
(86) International application number: PCT/JP2016/064186
(87) International publication number: WO 2016/186004

(57) **Abstract**

A user apparatus that communicates with a base station in a mobile communication system that supports uplink carrier aggregation, including: determination means configured to determine, based on assignment information, of an uplink transmission resource, received from the base station, whether a serving cell corresponding to the uplink transmission resource is a cell that uses a licensed spectrum or not; and transmission means configured, if the serving cell is determined to be a cell that uses the licensed spectrum by the determination means, to transmit a MAC control element to the base station by the serving cell.

## Description

### TECHNICAL FIELD

The present invention relates to a technique for transmitting a control signal to a base station from a user apparatus in a mobile communication system such as LTE.

### BACKGROUND ART

In the current LTE (Long Term Evolution) system, radio communication is performed by using licensed bands that are assigned to communication carriers. The popularization of sophisticated user apparatuses (to be referred to as UE) such as smart phones and tablets and the like rapidly increases user traffic. For absorbing the increasing user traffic, it is necessary to add further frequency bands. However, there is a limitation in the spectrum (licensed spectrum) of the licensed bands. Therefore, it is being studied to expand frequency bands of the LTE system by utilizing a band (to be referred to as an unlicensed band) of an unlicensed spectrum that can be used in addition to the licensed bands (non-patent document 1).

For example, it is being studied to perform carrier aggregation (CA) for aggregating a carrier of a licensed band and a carrier of an unlicensed band. Accordingly, the communication performed by using the unlicensed band together with the licensed band is called LAA (Licensed Assisted Access).

### RELATED ART DOCUMENT

### [NON PATENT DOCUMENT]

[NON PATENT DOCUMENT 1] RP-131701
[NON PATENT DOCUMENT 2] 3GPP TS 36.321 V12.5.0 (2015-03)

### SUMMARY OF THE INVENTION

### PROBLEM TO BE SOLVED BY THE INVENTION

When a UE that performs communication using a carrier (that may be referred to as a frequency) of an unlicensed band detects another entity (another UE and the like) that performs communication using the carrier of the unlicensed band, the UE is prohibited from performing transmission using the carrier. Therefore, the UE executes Listen before Talk (LBT) at a timing a predetermined period before an UL transmission timing. The UE that executes LBT searches the whole band of the target carrier at a timing a predetermined period before the UL transmission timing to check if another apparatus (base station, LAA (Licensed Assisted Access)-UE, WiFi (registered trade mark) device and the like) is performing communication in a band of the carrier, and only if it is confirmed that the other apparatus is not performing communication, the UE performs transmission using the carrier. On the other hand, if it is detected that the other apparatus is using at least a part of the band, that is, if it is detected that received power of a signal of the band from the other apparatus exceeds a threshold, the UE stops transmission of the UE (LBT:NG).

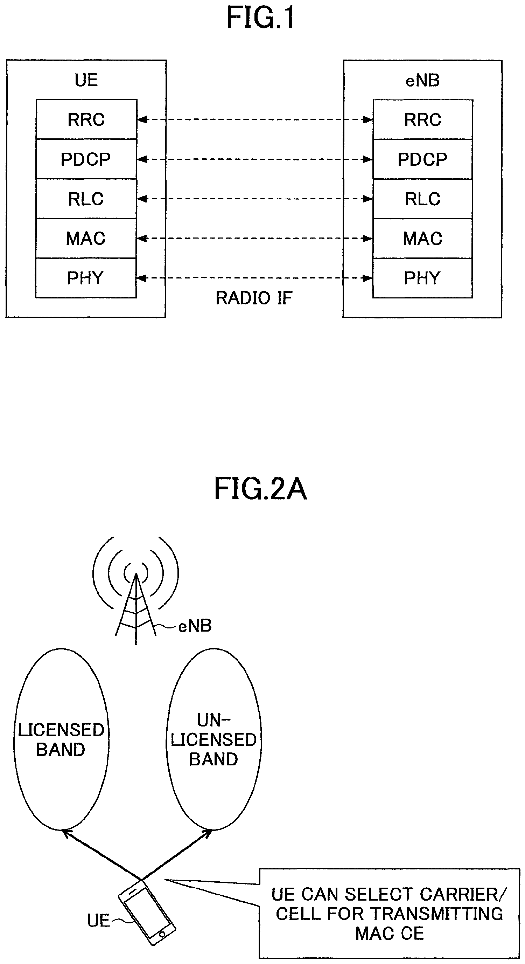

Here, Fig. 1 shows an example of a protocol configuration of a radio interface between a UE and a base station (to be referred to as an eNB) in LTE. As shown in Fig. 1, the protocol includes PHY, MAC (Medium Access Control), RLC (Radio Link Control), PDCP, (Packet Data Convergence Protocol) and RRC (Radio Resource Control). In these, the MAC, the RLC and the PDCP form the layer 2. The MAC, the RLC and the PDCP are sublayers of the layer 2 respectively.

In the sublayers of the layer 2, the MAC is a protocol for performing radio resource assignment, data mapping to a transport block (TB), HARQ retransmission control and the like.

In LTE, MAC CE (MAC Control Element) is defined as a control signal for performing control in the MAC layer (non-patent document 2).

For example, as a MAC CE for UL, there are BSR MAC CE, PHR MAC CE and C-RNTI MAC CE. The BSR MAC CE is a MAC CE for reporting, to the eNB, an UL data amount that becomes transmittable in the UE. The PHR MAC CE is a MAC CE for reporting surplus power for UL transmission to the eNB. The C-RNTI MAC CE is a MAC CE for reporting an identifier (C-RNTI) of the UE to the eNB in CBRA (Contention Based Random Access).

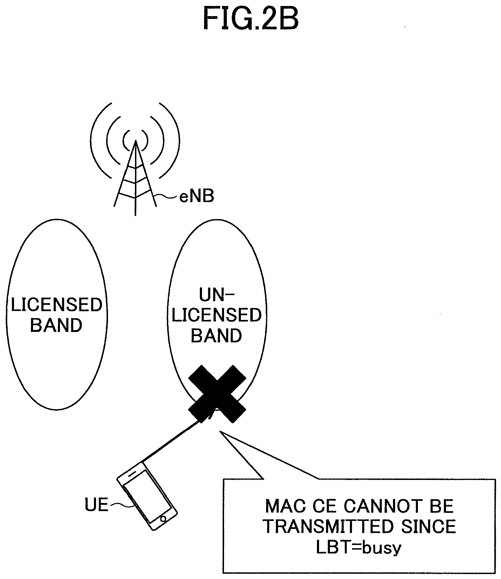

Here, in UL CA for performing CA using a plurality of component carriers (CC) in uplink (UL), a MAC PDU (transport block) is generated for each CC and transmitted for each CC. However, in the case where one MAC CE to be transmitted to the eNB is generated in the UE, which MAC PDU of CC the MAC CE is stored in is up to implementation of the UE. Therefore, there is a problem shown in Fig. 2.

That is, as shown in Fig. 2A, in the case where UL CA is performed using a CC (CC may be referred to as a cell, same applies hereinafter) of a licensed band and a CC of an unlicensed band, when a MAC CE is generated in the UE, the UE may select any CC of the bands as a CC for transmitting the MAC CE. Then, as shown in Fig. 2B, in the case where the UE tries to transmit the MAC CE using a CC of the unlicensed band (in the case where the MAC CE is mapped to a MAC PDU corresponding to a CC of the unlicensed band), if LBT becomes busy at this timing, the UE cannot transmit the MAC CE so that transmission of the MAC CE is delayed.

When transmission of the MAC CE from the UE to the eNB is delayed, there is a possibility in that UL scheduling timing delays and proper transmission power control cannot be performed.

The present invention is contrived in view of the above-mentioned points, and an object of the present invention is to provide a technique that can avoid delay of transmission of a MAC CE in the user apparatus in the case where uplink carrier aggregation formed by a plurality of cells including a cell using an unlicensed spectrum is executed.

### MEANS FOR SOLVING THE PROBLEM

According to an embodiment of the present invention, there is provided a user apparatus that communicates with a base station in a mobile communication system that supports uplink carrier aggregation, including:
determination means configured to determine, based on assignment information, of an uplink transmission resource, received from the base station, whether a serving cell corresponding to the uplink transmission resource is a cell that uses a licensed spectrum or not; and
transmission means configured, if the serving cell is determined to be a cell that uses the licensed spectrum by the determination means, to transmit a MAC control element to the base station by the serving cell.

According to an embodiment of the present invention, there is provided a user apparatus that communicates with a base station in a mobile communication system that supports uplink carrier aggregation, including:
determination means configured to determine, based on assignment information, of an uplink transmission resource, received from the base station, whether a serving cell corresponding to the uplink transmission resource is a cell in which a signaling radio bearer can be transmitted or not; and
transmission means configured, if the serving cell is determined to be a cell in which a signaling radio bearer can be transmitted by the determination means, to transmit a MAC control element to the base station by the serving cell.

According to an embodiment of the present invention, there is provided a user apparatus that communicates with a base station in a mobile communication system that supports uplink carrier aggregation, including:
transmission means configured, based on assignment information, of an uplink transmission resource, received from the base station, to transmit a MAC control element, on which a transmission trigger is performed, by using the uplink transmission resource; and
determination means configured to determine whether a serving cell corresponding to the uplink transmission resource is a cell that uses a licensed spectrum or not,
wherein the transmission means does not cancel the transmission trigger of the MAC control element if the serving cell is determined not to be a cell that uses the licensed spectrum by the determination means.

According to an embodiment of the present invention, there is provided a user apparatus that communicates with a base station in a mobile communication system that supports uplink carrier aggregation, including:
transmission means configured, based on assignment information, of an uplink transmission resource, received from the base station, to transmit a MAC control element, on which a transmission trigger is performed, by using the uplink transmission resource; and
determination means configured to determine whether the MAC control element has been transmitted or not,
wherein, if it is determined that transmission of the MAC control element has not been performed by the determination means, the transmission means does not cancel the transmission trigger of the MAC control element.

According to an embodiment of the present invention, there is provided a MAC control element transmission method executed by a user apparatus that communicates with a base station in a mobile communication system that supports uplink carrier aggregation, including:
determining, based on assignment information, of an uplink transmission resource, received from the base station, whether a serving cell corresponding to the uplink transmission resource is a cell that uses a licensed spectrum or not; and
transmitting a MAC control element to the base station by the serving cell if the serving cell is determined to be a cell that uses the licensed spectrum.

### EFFECT OF THE PRESENT INVENTION

According to an embodiment of the present invention, there can be provided a technique that can avoid delay of transmission of a MAC CE in the user apparatus in the case where uplink carrier aggregation formed by a plurality of cells including a cell using an unlicensed spectrum is executed.

### BRIEF DESCRIPTION OF THE DRAWINGS

Fig. 1 is a diagram showing a protocol configuration of a radio interface between UE and eNB in LTE;
Fig. 2A is a diagram for explaining a problem;
Fig. 2B is a diagram for explaining a problem;
Fig. 3 is a block diagram of a mobile communication system in an embodiment of the present invention;
Fig. 4 is a diagram showing a procedure example 1 for transmitting a MAC CE;
Fig. 5 is a diagram showing a procedure example 2 for transmitting a MAC CE;
Fig. 6 is a flowchart (example 1) showing a process procedure example of a UE according to the present embodiment;
Fig. 7 is a flowchart (example 2) showing a process procedure example of a UE in the case where only a specific MAC CE is transmitted by a licensed band;
Fig. 8 is a flowchart (example 3) showing a process procedure example of a UE in the case where a MAC CE is transmitted in a cell in which an SRB can be transmitted;
Fig. 9 is a flowchart (example 4) showing an example in which a MAC CE is transmitted by an unlicensed band in the case where the MAC CE cannot be transmitted by a licensed band;
Fig. 10 is a flowchart showing a procedure example of BSR control in a modified example 1;
Fig. 11 is a flowchart showing a procedure example of PHR control in a modified example 1;
Fig. 12 is a flowchart showing a procedure example of MAC CE transmission control in a modified example 2;
Fig. 13 is a block diagram of a user apparatus UE in the present embodiment;
Fig. 14 is a HW block diagram of the user apparatus UE.

### EMBODIMENTS FOR CARRYING OUT THE INVENTION

In the following, an embodiment of the present invention is described with reference to figures. The embodiment described below is merely an example, and the embodiment to which the present invention is applied is not limited to the embodiment below.

The licensed band used in the following description may be referred to as licensed spectrum. Also, the unlicensed band used in the following description may be referred to as unlicensed spectrum. Also, a cell that uses a carrier of the unlicensed band/unlicensed spectrum may be referred to as an LAA cell.

Also, in the following description, a signal which is a target for performing transmission control is a MAC CE. However, this is merely an example, and a control signal other than the MAC CE may be a target of transmission control.

Also, in the present embodiment, although control when performing UL CA by a CC of a licensed band and a CC of an unlicensed band is described, this is an example. Control similar to that described below may be performed also for the case where the component elements of UL CA are a CC of a band and a CC of another band which are not a CC of a licensed band and a CC of an unlicensed band.

Also, in the embodiment described below, "CC" may be referred to as "cell". Also, a cell where a resource of uplink PUSCH transmission is assigned by an UL grant may be referred to as a "serving cell".

The release of 3GPP standard specification of "LTE" in the present specification and the claims is any release where CA is introduced, but, it is not limited to this.

### (System whole configuration)

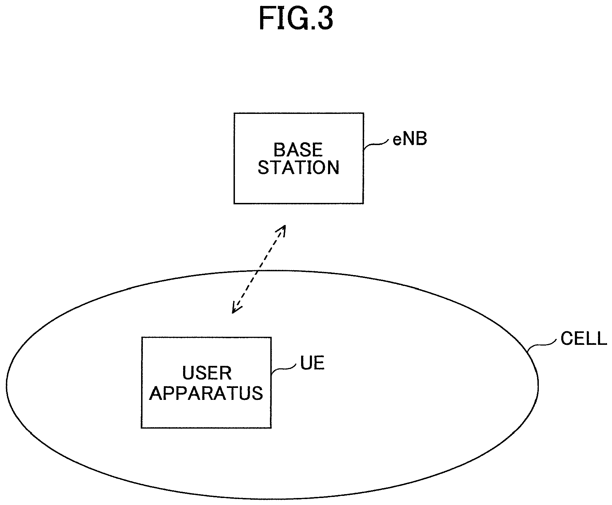

Fig. 3 shows a block diagram of a mobile communication system in an embodiment of the present invention. As shown in Fig. 3, the mobile communication system of the present embodiment is a mobile communication system including a base station eNB (to be referred to as eNB hereinafter) and a user apparatus UE (to be referred to as UE hereinafter). It is possible to perform CA communication by the eNB and the UE. Fig. 3 shows one eNB and one UE. However, this is for the sake of convenience of drawing, and a plurality of ones may exist respectively.

In the example of Fig. 3, although one cell is shown, this is also for the sake of convenience of drawing. There are a plurality of cells when CA is configured. Also, for example, a configuration may be adopted in which one or a plurality of RREs (remote radio equipment) that is (are) connected to the eNB by an optical fiber and the like in a remote place from the eNB is (are) provided. Also, a configuration of Dual connectivity including a plurality of eNBs may be adopted. The above-mentioned CA communication includes communication by Inter-eNB CA by Dual connectivity in addition to communication by Intra-eNB CA.

Here, an outline of CA is described. CA is a scheme for performing communication by simultaneously using a plurality of carriers. In CA, a carrier which becomes a basic unit is called a component carrier (CC : component carrier).

When CA is performed, a PCell (Primary cell) that is a reliable cell for ensuring connectivity and an SCell (Secondary cell) that is an appendant cell are set for the UE. The UE connects to a PCell first, and then, an SCell can be added as necessary. The PCell is a cell similar to an independent cell for supporting RLM (Radio Link Monitoring) and SPS (Semi-Persistent Scheduling) and the like.

Addition and deletion of the SCell is performed by RRC signaling. Since an SCell is in a deactivated state right after it is set in the UE, communication becomes available (scheduling becomes available) only by activating it.

For example, a PCell includes an UL CC and a DL CC, and an SCell includes only a DL CC or includes an UL CC and a DL CC. Also, a "cell" such as the PCell and the SCell that form the CA is a cell in which the UE resides, and it may be referred to as a serving cell.

In the present embodiment, the UE is configured with, by an RRC signaling from the eNB, UL CA including a CC (cell) of a licensed band and a CC (cell) of an unlicensed band.

Also, in the present embodiment, the UE performs LBT when performing transmission using a CC of an unlicensed band. That is, the UE searches the whole band of the CC of the unlicensed band, and if the UE detects that received power of a signal from another apparatus exceeds a threshold in at least a part of the band, the UE stops transmission in the CC (cell). For example, the UE executes LBT a predetermined time before the UL transmission timing based on a TA value specified from the eNB. The UE may execute LBT in a predetermined cycle (example: for each subframe) or may execute LBT only when there is a trigger of UL signal transmission (example: when there is a trigger of MAC CE transmission).

### (Basic operation example of the system)

Since the present embodiment is related to control when the UE transmits a MAC CE to the eNB from the UE, a basic operation example on the transmission of the MAC CE is described first (non-patent document 2).

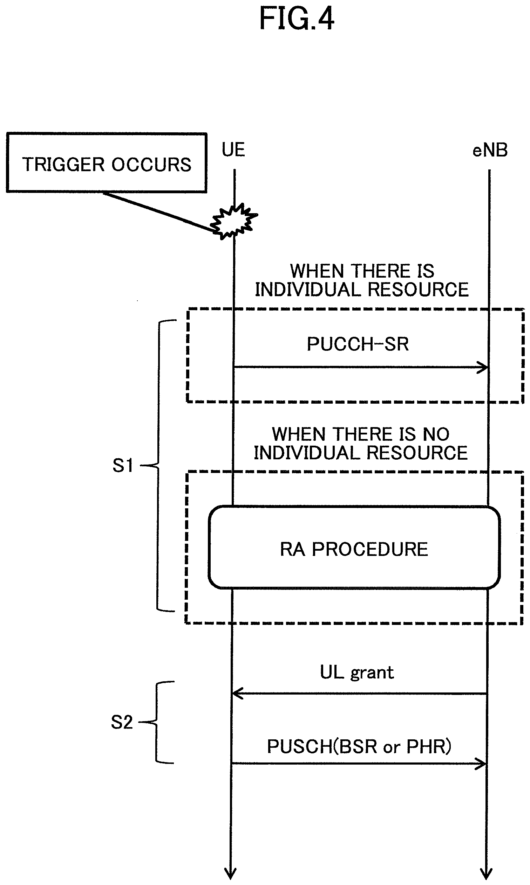

Fig. 4 shows a procedure example for transmission of a MAC CE on a BSR MAC CE and a PHR MAC CE.

First, in the UE, a trigger of MAC CE transmission occurs. In the case of BSR, the trigger corresponds to a case where data of higher priority occurs in the UE, a case where a Periodic BSR timer expires, or the like, for example. Also, in the case of PHR, the trigger corresponds to a case where prohibitPHR-Timer expires and path loss changes, a case where periodicPHR-Timer expires, or the like, for example.

In step S1 shown in Fig. 4, when the UE has an individual UL resource (PUCCH), the UE transmits a scheduling request (SR: Scheduling Request) to the eNB. When the individual UL resource is not held, the UE starts a Random Access (RA) procedure.

In step S2, the UE receives an UL grant including information of an assigned resource of a PUSCH (Physical Uplink Shared Channel), and transmits a MAC CE using the assigned resource.

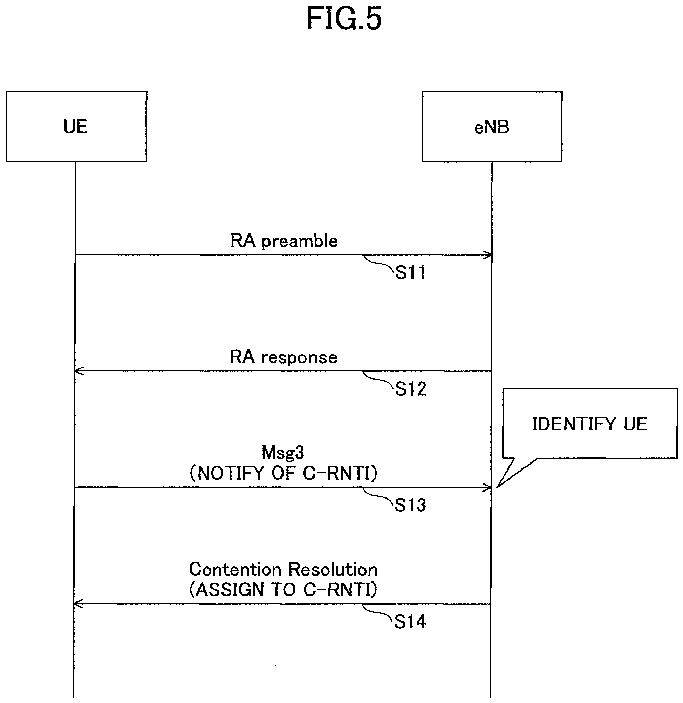

Fig. 5 is a diagram showing a CBRA procedure as a procedure example when the UE transmits a C-RNTI MAC CE.

The UE transmits an RA preamble using a PRACH (step S11). The eNB that receives the RA preamble returns an RA response (step S12). The RA response includes transmission timing information, uplink transmission resource assignment information (UL grant) and the like. The assignment information is resource assignment information of a PUSCH for transmitting a next message 3 (described as Msg3).

The UE that receives the RA response transmits a Msg3 including a C-RNTI MAC CE to the eNB (step S13). The eNB identifies that the UE is an UE that is RRC-connected by the C-RNTI, and transmits a PDCCH including UL resource assignment information masked by the C-RNTI to the UE (step S14). The UE recognizes that random access succeeds without collision (Contention resolution) by obtaining the UL resource assignment information by the C-RNTI, and executes next uplink transmission based on the uplink resource assignment information.

In the present embodiment, for example, when transmitting a MAC CE based on the procedure shown in Fig. 4 and Fig. 5, various controls are performed by providing MAC CE transmission rules in order to avoid transmission delay. In the following, these control contents are described in detail as examples.

In each of the following examples and modified examples, it is assumed that the UE is configured with UL CA using a CC of a licensed band and a CC of an unlicensed band. Also, as described before, the UE performs LBT for the CC of the unlicensed band. By the way, "a CC of a licensed band" may be referred to as "a cell using a licensed spectrum", and "a CC of an unlicensed band" may be referred to as "a cell using an unlicensed spectrum".

### (Example 1)

First, an example 1 is described. In the example 1, control is performed such that the UE transmits a MAC CE only by a licensed band.

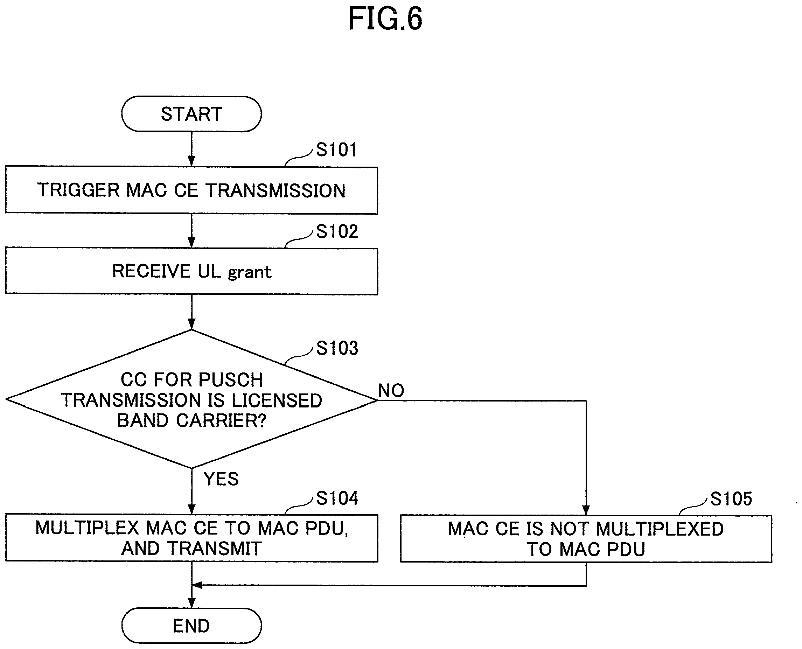

An example of a process procedure of the UE in the example 1 is described with reference to a flowchart of Fig. 6. In step S101, the UE triggers MAC CE transmission. In the case of BSR (Buffer Status Reporting), for example, triggering MAC CE transmission corresponds to starting a BSR procedure based on occurrence of data of higher priority, or based on expiration of a Periodic BSR timer or the like. Also, for example, in the case of PHR (Power Headroom Reporting), it corresponds to starting a PHR procedure when prohibitPHR-Timer expires and pathloss change occurs, or when periodicPHR-Timer expires.

In step S102, the UE receives an UL grant (PDCCH). The UE receives the UL grant in a cell of a licensed band or a cell of an unlicensed band.

For example, in the case where the UE is not configured such that it can recognize CIF (carrier indicator field), that is, in the case where the UE does not perform cross carrier scheduling, the UE that has received the UL grant determines to perform transmission of a MAC CE by using an UL CC of the cell (scheduling cell) in which the UL grant has been received.

In the case where the UE is configured such that it can recognize CIF (carrier indicator field), that is, in the case where the UE performs cross carrier scheduling, the UE that has received the UL grant identifies the cell (serving cell) of the scheduling target based on a CIF in the PDCCH (or EPDCCH, same applies hereinafter) of the UL grant, and determines to perform transmission of a MAC CE by using an UL CC of the cell.

Assignment information indicating which resource to use in the UL CC is included in the UL grant as resource assignment information of the PUSCH. The resource assignment information is, for example, the number of resource blocks, information indicating a range of frequency-time, and the like, but, it is not limited to these.

In step S103 of Fig. 6, the UE determines whether the CC for performing PUSCH transmission of the MAC CE is a carrier of a licensed band or not. That is, the UE determines whether the serving cell corresponding to the uplink transmission resource is a cell using a licensed spectrum.

The method by which the UE determines whether the CC for performing PUSCH transmission is a carrier of a licensed band or not is not limited to a specific method. However, for example, the UE has information of a range of frequencies indicating what range of frequencies the licensed band is in, so that the UE determines, based on the frequency and the bandwidth of the CC for performing PUSCH transmission, whether the band of the CC falls within the range of the licensed band (within the range of the frequencies) so as to be able to determine whether the CC for performing PUSCH transmission is a carrier of a licensed band. Note that the UE holds information of frequencies and bandwidths of CCs that form CA by RRC signaling and the like from the eNB.

Also, the UE may hold, by RRC signaling and the like from the eNB, information indicating whether a cell is a cell using a licensed band for each piece of cell identification information (example: CellIndex, SCellIndex). In this case, the UE can determine whether the CC for performing PUSCH transmission is a carrier of a licensed band or not based on cell identification information corresponding to the CC for performing PUSCH transmission and the held information.

Also, for each piece of cell identification information (example: CellIndex, SCellIndex), it may be predetermined whether the cell is a cell that uses a licensed band or not. As an example, in the case where it is predetermined that, if an index (number) of a cell is smaller than a predetermined value (or larger than a predetermined value), the cell is a cell of a licensed band, the UE can determine whether the CC for performing PUSCH transmission is a carrier of a licensed band based on an index of the cell corresponding to the CC for performing PUSCH transmission.

Also, the UL grant may include information indicating whether UL resource assignment is assignment for a CC of a licensed band. In this case, the UE can determine whether the CC for performing PUSCH transmission is a carrier of a licensed band or not by referring to the information.

Also, for example, the UE may hold identification information of a cell in which LBT is performed. In this case, by using the information, the UE can determine whether a cell of a CC for performing PUSCH transmission is a cell in which LBT is performed or not. For example, when a cell of a CC for performing PUSCH transmission is a cell in which LBT is performed, the UE can determine that the cell is a cell of an unlicensed band. Also, when the cell of the CC for performing PUSCH transmission is a cell in which LBT is not performed, the UE can determine that the cell is a cell of a licensed band.

In order that the UE holds identification information of a cell in which LBT is performed, the UE may receive information of LBT present or LBT absent as a configuration of the cell by RRC signaling and the like from the eNB. Also, in the case where "determination threshold when performing LBT = infinity" is set as the configuration of the cell, the UE may determine that the cell is a cell of a licensed band.

In step S103 of Fig. 6, if the CC for performing PUSCH transmission is determined to be a carrier of a licensed band, the process goes to step S104. In step S103, if the CC for performing PUSCH transmission is not determined to be a carrier of a licensed band, the process goes to step S105.

Instead of determining whether the CC for performing PUSCH transmission is a carrier of a licensed band or not, the UE may determine whether the CC for performing PUSCH transmission is a carrier of an unlicensed band or not. In that case, in step S103 of Fig. 6, if the CC for performing PUSCH transmission is not determined to be a carrier of an unlicensed band, the process goes to step S104. In step S103, if the CC for performing PUSCH transmission is determined to be a carrier of an unlicensed band, the process goes to step S105.

In step S104, the UE multiplexes the MAC CE to a MAC PDU and transmits it. In step S104, since the MAC CE is transmitted by a CC of a licensed band based on the determination result in step S103, delay due to LBT=busy does not occur.

In step S105, the UE does not multiplex the MAC CE to the MAC PDU. In this case, for example, the UE stores the generated MAC CE in a memory unit such as a buffer, waits until UL resource assignment that causes transition to step S104 is performed, and transmits the MAC CE stored in the buffer when the process goes to step S104.

### (Example 2)

Next, an example 2 is described. In the above-mentioned example 1, every MAC CE is transmitted by a CC of a licensed band irrespective of the type of the MAC CE. On the other hand, in the example 2 only a specific type of MAC CE is transmitted by a CC of a licensed band, and a MAC CE other than the specific type of MAC CE is transmitted by a CC of an unlicensed band.

The specific type of MAC CE to be transmitted by a CC of a licensed band is, for example, Regular BSR, Periodic BSR and PHR. These MAC CEs are information essential for scheduling, so that, in order to deliver the MAC CE to the eNB without delay as much as possible, these MAC CEs are transmitted by a CC of a licensed band in the example 2. On the other hand, padding BSR is transmitted by a CC of an unlicensed band in the example 2.

As to the specific type of MAC CE to be transmitted by a CC of a licensed band, the above-mentioned examples are merely examples, and a MAC CE different from the above-mentioned examples may be used as the specific type of MAC CE.

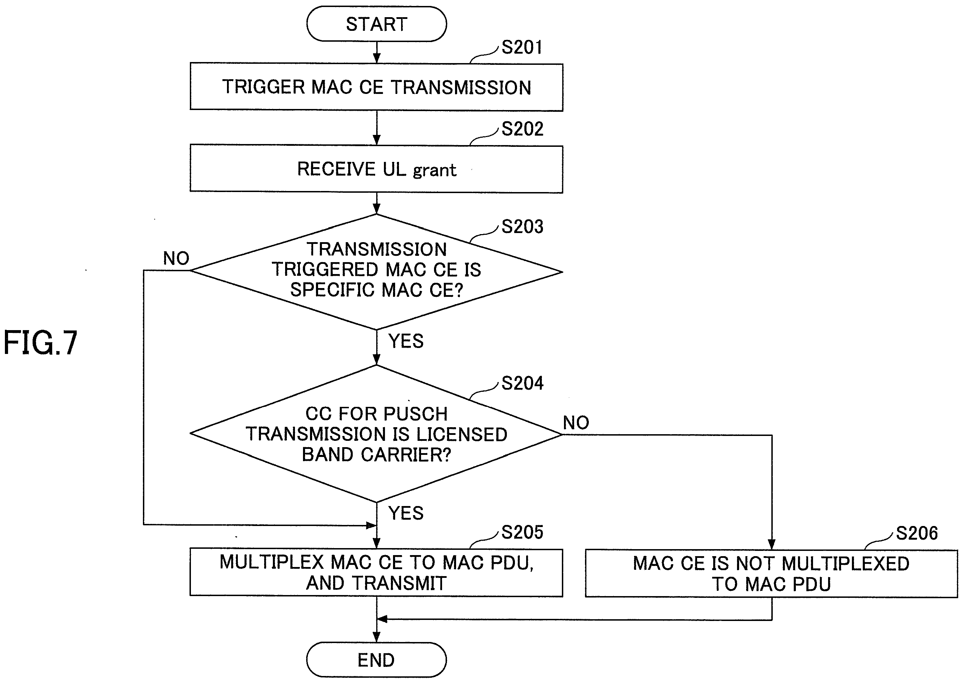

An example of a process procedure of the UE in the example 2 is described with reference to a flowchart of Fig. 7. In the following, points different from processes in the example 1 (Fig. 6) are mainly described.

Steps S201 and S202 are the same as steps S101 and S102 in the example 1.

In step S203, the UE determines whether the transmission-triggered MAC CE is a specific type of MAC CE or not. The specific type of MAC CE is, for example, as mentioned above, Regular BSR, Periodic BSR and PHR and the like. Note that the specific MAC CE may be predetermined in the mobile communication system, so that the UE may hold information of the specific type of MAC CE beforehand, or information of the specific type of MAC CE may be transmitted from the eNB to the UE by RRC signaling and the like, so that the UE may perform determination according to the information.

If the determination result in step S203 is Yes, the UE determines to transmit the MAC CE by a CC of a licensed band, and the process goes to step S204. In step S204, the UE determines whether a CC for PUSCH transmission is a carrier of a licensed band or not. The determination here is the same as step S103 of the example 1.

If the determination result in step S204 is Yes, that is, if a CC for PUSCH transmission of a MAC CE is a licensed band carrier, the process goes to step S205. In step S205, the UE multiplexes the MAC CE to a MAC PDU and transmits it.

If the determination result in step S204 is No, the process goes to step S206, so that the UE does not multiplex the MAC CE to the MAC PDU. In the same way as step S105 of the example 1, in this case, for example, the UE stores the generated MAC CE in a memory unit such as a buffer, waits until UL resource assignment that causes transition to step S205 is performed, and transmits the MAC CE stored in the buffer when the process goes to step S205.

If the determination result in step S203 is No, that is, if the transmission-triggered MAC CE is not a specific type of MAC CE, the UE determines to transmit the MAC CE using the assigned CC resource irrespective of whether it is a licensed band or an unlicensed band, and the process goes to step S205, so that the UE multiplexes the MAC CE to the MAC PDU and transmits it.

### <Designation of cell/carrier from NW>

As already described in the examples 1 and 2, the UE can determine whether a CC for PUSCH transmission is a carrier of a licensed band by using information of cell/carrier (which means a cell or a carrier, in which "cell" is synonymous with "carrier" here) designated from the eNB, so that the UE can determine whether to perform transmission of the MAC CE using the CC based on the determination result. That is, the UE can transmit the MAC CE using a cell/ a carrier designated from the NW.

Information of a cell/a carrier designated from the eNB to the UE is, for example, identification information of the cell or the carrier. As identification information of a cell, for example, ServCellIndex or SCellIndex can be used.

Information of a cell/a carrier designated from the eNB to the UE may be information for the whole MAC CEs or may be information for each type of MAC CE. In the case of the information for the whole MAC CEs, identification information of a cell/a carrier is notified from the eNB to the UE, so that the UE performs transmission determination using the identification information for any MAC CE.

In the case where the information of a cell/a carrier designated from the eNB to the UE is for each type of MAC CE, for example, information such as "cells 1-3" for regular BSR and "cells 4-5" for padding BSR is notified from the eNB to the UE, so that the UE executes transmission determination based on "cells 1-3" when a trigger of regular BSR occurs, and executes transmission determination based on "cells 4-5" when a trigger of padding BSR occurs.

Also, in the case where information of a cell / a carrier by which a MAC CE can be transmitted is not explicitly notified from the eNB to the UE, it may be defined that the UE regards that the MAC CE can be transmitted by any of an licensed band and an unlicensed band, or it may be defined that the UE regards that the MAC CE can be transmitted only by a licensed band.

In the case where information of a cell/a carrier by which a MAC CE can be transmitted is explicitly transmitted from the eNB to the UE, the information may be transmitted by a signal of any layer of RRC, MAC and PHY.

### (Example 3)

In LTE, a radio bearer which is a logical communication route of a packet is configured between the UE and the eNB. Signal transmission and reception are performed by the radio bearer. As the radio bearer, there are an SRB (Signaling Radio Bearer) used for transmission and reception of signaling of RRC and NAS and the like, and a DRB (Data Radio Bearer) used for data transmission and reception.

In the example 3, a MAC CE is regarded to have importance (priority) similar to that of the SRB, so that the MAC CE is transmitted in a cell (CC) where transmission of an SRB is available. In the example 3, irrespective of whether the cell where an SRB can be transmitted is only a cell of a licensed band or not, a MAC CE is transmitted in a cell (CC) where transmission of an SRB is available. That is, for example, in the case where a cell in which an SRB can be transmitted is both of a cell of a licensed band and a cell of an unlicensed band, the UE can transmit a MAC CE by any one of a cell of a licensed band and a cell of an unlicensed band.

Also, in the case where it is defined that a cell (CC) where transmission of an SRB is available is only a cell of a licensed band, the example 3 is substantially the same as the example 1. In this case, the example 3 corresponds to the case where, in the example 1, determination of whether to be a cell of a licensed band or not is performed by determination of whether to be a cell where transmission of an SRB is available or not.

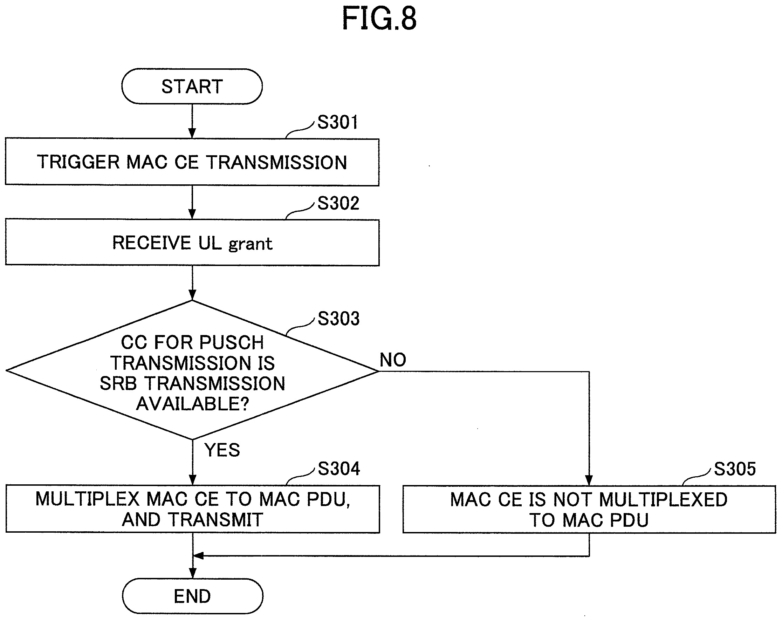

An example of a process procedure of the UE in the example 3 is described with reference to a flowchart of Fig. 8. In the following, points different from processes in the example 1 (Fig. 6) are mainly described.

Steps S301 and S302 are the same as steps S101 and S102 in the example 1.

In step S303, the UE determines whether the CC for performing PUSCH transmission of a MAC CE is a CC by which an SRB can be transmitted or not.

The UE holds information of a CC (or a cell), beforehand, by which SRB transmission is available, so that the UE determines whether the CC for performing PUSCH transmission is a CC by which SRB transmission is available or not by referring to the information. As to a method in which the UE holds information of a CC (or a cell) by which SRB transmission is available beforehand, for example, the information may be notified from the eNB to the UE when a radio bearer is configured, so that the UE may hold the information. Or, the UE may hold it in a fixed manner.

Also, the information of a CC (or a cell) by which SRB transmission is available may be an index of the CC (or the cell), or may be other information. Also, instead of information of a CC (or a cell) by which SRB transmission is available, information of a CC (or a cell) by which SRB transmission is unavailable may be used.

In step S303 of Fig. 8, if the CC for performing PUSCH transmission is determined to be a CC by which SRB transmission is available, the process goes to step S304. In step S303, if the CC for performing PUSCH transmission is not determined to be a CC by which SRB transmission is available, the process goes to step S305.

In step S304, the UE multiplexes the MAC CE to the MAC PDU and transmits it. In step S305, the UE does not multiplex the MAC CE to the MAC PDU. In this case, for example, the UE stores the generated MAC CE in a memory unit such as a buffer, waits until UL resource assignment that causes transition to step S304 is performed, and transmits the MAC CE stored in the buffer when the process goes to step S304.

### (Example 4)

In the examples 1-3, a MAC CE can be transmitted only by a CC of a licensed band. Accordingly, the problem of LBT=busy in the case of using an unlicensed band can be solved. However, in a CC of a licensed band, a situation may occur in which UL resource assignment cannot be performed immediately due to congestion of the CC, for example. If such a situation continues in the case where a MAC CE is transmitted only by a CC of a licensed band, the eNB never receive the MAC CE, so that there is a possibility in that delay of scheduling and the like occurs.

Therefore, in the example 4, if transmission to the eNB cannot be performed for a predetermined period after a MAC CE is triggered, MAC CE transmission in an unlicensed band is permitted.

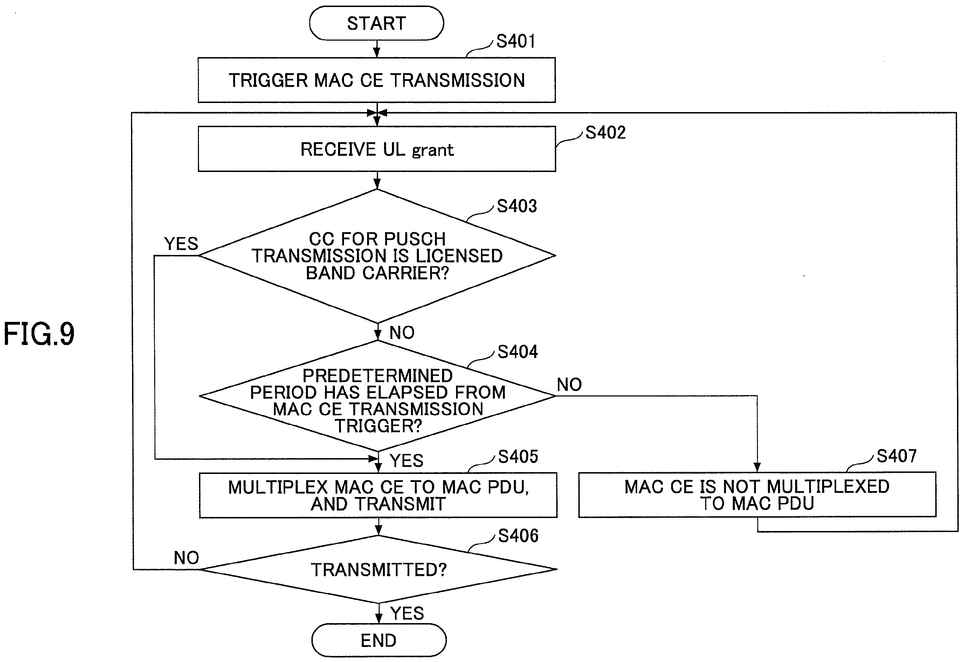

An example of a process procedure of the UE in the example 4 is described with reference to a flowchart of Fig. 9. Fig. 9 corresponds to a flow in which steps S404 and S406 are added to the example 1. Processing can be also performed by the similar flow for the examples 2 and 3. In the following, points different from processes in the example 1 (Fig. 6) are mainly described.

Steps S401, S402 and S403 are the same as steps S101, S102 and S103 in the example 1.

If the determination result in step S403 is Yes, the process goes to step S405, and if the determination result is No, the process goes to step S404.

In step S405, the UE multiplexes the MAC CE to the MAC PDU and transmits it. However, as described before, there is a possibility in that the MAC CE has not reached the eNB due to congestion and the like. Also, there is a possibility in that transmission by radio could not be performed.

In step S406, the UE determines whether the MAC CE has been transmitted to the eNB or not. The determination here can be performed, for example, based on whether an ACK for the transmission in step S405 has been received or not. That is, if the ACK has been received, it is determined that the MAC CE has been transmitted. The method for determining whether the MAC CE has been transmitted to the eNB is not limited to the above-mentioned method, and it may be determined by other methods. For example, it may be determined by an indication, indicating "transmitted" or "not transmitted", that is notified from a physical layer (PHY) (example: after-mentioned UL signal transmission unit 102) to a MAC layer (example: after-mentioned MAC processing unit 104) .

If the determination result is No in step S406, that is, it cannot be confirmed that the MAC CE has been transmitted to the eNB, the process returns to step S402. Note that, in the example 4, the trigger is not cancelled and the UE continues the procedure for transmitting the MAC CE until the MAC CE corresponding to the MAC CE transmission trigger of step S401 is transmitted.

If the determination result of step S403 is No (in the case of UL assignment by an unlicensed band), the process goes to step S404, so that the UE determines whether a predetermined period elapses from when the MAC CE transmission trigger occurs in step S401. If the predetermined period has elapsed (Yes in step S404), the process goes to step S405, so that the before-mentioned process is executed. That is, the UE transmits the MAC CE using a CC of an unlicensed band. Here, for example, it is assumed that there is no congestion in the unlicensed band, and LBT=busy does not occur, so that the MAC CE is normally transmitted.

If the predetermined period has not elapsed in step S404 (if No in step S404), the process goes to step S407, and returns to step S402 without multiplexing the MAC CE to the MAC PDU. After that, the above-mentioned processes are repeated.

### (Modified example 1)

In the examples 1-4 described so far, the UE basically transmits a MAC CE only by a CC of a licensed band. On the other hand, in the modified example 1 (and modified example 2) described below, the UE may basically transmit a MAC CE by any of a CC of a licensed band and a CC of an unlicensed band.

In the case where the UE transmits a MAC CE using a CC of an unlicensed band, a case can be considered in which LBT is executed and LBT=busy occurs. Thus, in the modified example 1, by assuming that LBT=busy occurs, control is executed such that the MAC CE can be transmitted using a licensed band cell immediately after transmission processing by a CC of an unlicensed band. An example of concrete control is described next.

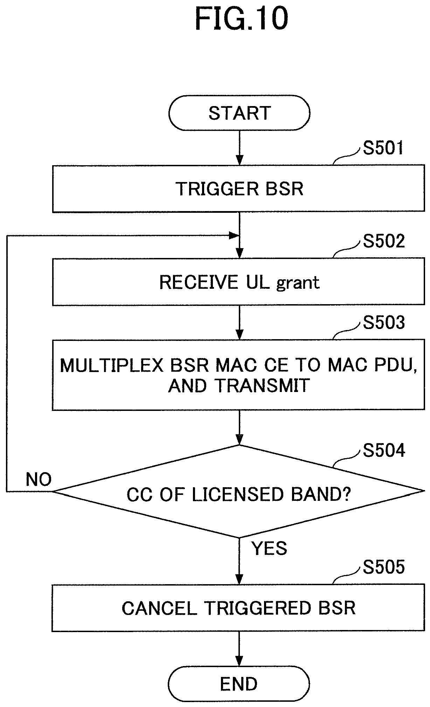

Fig. 10 is a diagram showing a procedure example of BSR control in the modified example 1. In step S501 of Fig. 10, the UE triggers BSR, and receives an UL grant in step S502.

In step S503, in the modified example 1, irrespective of whether a CC of a PUSCH transmission resource assigned by the UL grant is a licensed band or an unlicensed band, the UE multiplexes a BSR MAC CE to a MAC PDU and transmits it. Here, the UE does not cancel the triggered BSR. Note that, although processing for transmission is performed in step S503, transmission processing is halted when LBT=busy occurs so that transmission processing does not complete.

In step S504, the UE determines whether a resource (CC) for transmission in step S503 is a CC of a licensed band. If it is a licensed band, the process goes to step S505, and if it is not a licensed band (if it is an unlicensed band), the process goes to step S502. In step S505, the UE cancels the triggered BSR.

As the BRS trigger, for example, there is a BSR trigger that occurs when transmission of data belonging to a logical channel of higher priority than that of a logical channel corresponding to transmission-available data that already exists becomes available. The BSR by the trigger is called Regular BSR. The BSR trigger is normally cancelled when Regular BSR is transmitted. On the other hand, in the modified example 1, the trigger is not canceled until the Regular BSR is transmitted by a CC of a licensed band (steps S504, S505 of Fig. 10).

Also, normally, a Periodic BSR is triggered when periodicBSR-Timer expires, and the trigger is canceled when the Periodic BSR is transmitted. However, in the modified example 1, in the case where a Periodic BSR is triggered in step S501 of Fig. 10, the trigger is not cancelled and the state is regarded to be a state "where periodicBSR-Timer has expired" until the Periodic BSR is transmitted by a licensed band even if transmission processing of the Periodic BSR is performed by an unlicensed band (steps S504, S505 of Fig. 10).

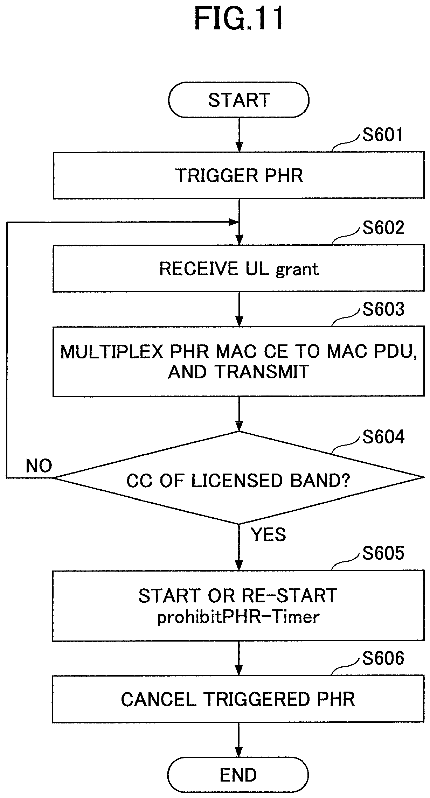

Fig. 11 is a diagram showing a procedure example of PHR control in the modified example 1. In PHR control, normally, after prohibitPHR-Timer starts or restarts, PHR is not triggered while prohibitPHR-Timer does not expire. In the modified example 1, even when PHR MAC CE transmission processing is performed by an unlicensed band, prohibitPHR-Timer is not started or restarted until a PHR is transmitted by a licensed band, so that a state in which prohibitPHR-Timer has expired continues.

In step S601 of Fig. 11, the UE triggers PHR, and receives an UL grant in step S602.

In step S603, in the modified example 1, irrespective of whether a CC of a PUSCH transmission resource assigned by the UL grant is a licensed band or an unlicensed band, the UE multiplexes a PHR MAC CE to a MAC PDU and transmits it. Here, the UE does not start or restart prohibitPHR-Timer and the UE does not cancel the triggered PHR. Note that, although processing for transmission is performed in step S603, transmission processing is halted when LBT=busy occurs so that transmission processing does not complete.

In step S604, the UE determines whether a resource (CC) for transmission in step S603 is a CC of a licensed band. If it is a licensed band, the process goes to step S605, and if it is not a licensed band (if it is an unlicensed band), the process goes to step S602.

The UE starts or restarts prohibitPHR-Timer in step S605, and in step S606, the UE cancels the triggered PHR.

### (Modified example 2)

Next, a modified example 2 is described. Similarly to the modified example 1, also in the modified example 2, the UE may transmit a MAC CE by any of a CC of a licensed band and a CC of an unlicensed band.

Normally, at the time when the UE maps (multiplexes) a triggered MAC CE to a MAC PDU, the UE cancels the trigger. If this operation is applied as it is, for example, the trigger is canceled even when, although the UE tries to transmit a MAC CE by an unlicensed band, the UE cannot actually transmit it to radio due to LBT =busy. Therefore, there is a possibility in that transmission delay of a MAC CE that should be transmitted to the eNB occurs.

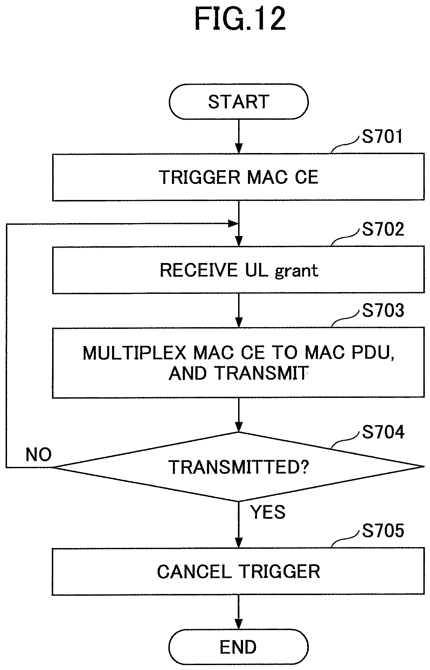

Therefore, in the modified example 2, the trigger is not canceled even if the MAC CE is mapped to a MAC PDU, and the trigger is cancelled when the MAC CE can be transmitted. In the following, a procedure example of the modified example 2 is described with reference to a flowchart of Fig. 12. The procedure described below is common irrespective of the type of the MAC CE. However, whether to apply the following procedure may be determined according to the type of the MAC CE.

In step S701 of Fig. 12, the UE triggers a MAC CE, and receives an UL grant in step S702.

In step S703, irrespective of whether a CC of a PUSCH transmission resource assigned by the UL grant is a licensed band or an unlicensed band, the UE multiplexes a MAC CE to a MAC PDU and transmits it. Here, the UE does not cancel the triggered MAC CE. Note that, although processing for transmission is performed in step S703, for example, transmission processing is halted when LBT=busy occurs so that the MAC PDU including the MAC CE cannot be transmitted by radio. Also, there is a case where the MAC PDU including the MAC CE cannot be transmitted when the radio section between the UE and the eNB is congested, and the like.

In step S704, the UE determines whether data transmission by radio has been performed as a result of the transmission processing in step S703. If the determination result is Yes (in the case of transmitted), the process goes to step S705 and if the determination result is No (in the case of not-transmitted), the process goes to step S702. In step S705, the UE cancels the transmission trigger of the MAC CE. In the case when the determination result in step S704 is No and the process goes to step S702, since the trigger is continuing, transmission processing of the triggered MAC CE can be performed if there is UL resource assignment by an UL grant.

Determining whether transmitted or not in step S704 can be performed by an indication, indicating "transmitted" or "not transmitted", that is notified from a physical layer (PHY) (example: after-mentioned UL signal transmission unit 102) to a MAC layer (example: after-mentioned MAC processing unit 104) in the UE, for example. Also, "transmitted" or "not transmitted" may be determined based on presence or absence of ACK reception from the eNB.

The example 1, the example 2, the example 3, the example 4, the modified example 1 and the modified example 2 that have been described so far can be arbitrarily combined and executed as long as contradiction does not occur.

### (Apparatus configuration example)

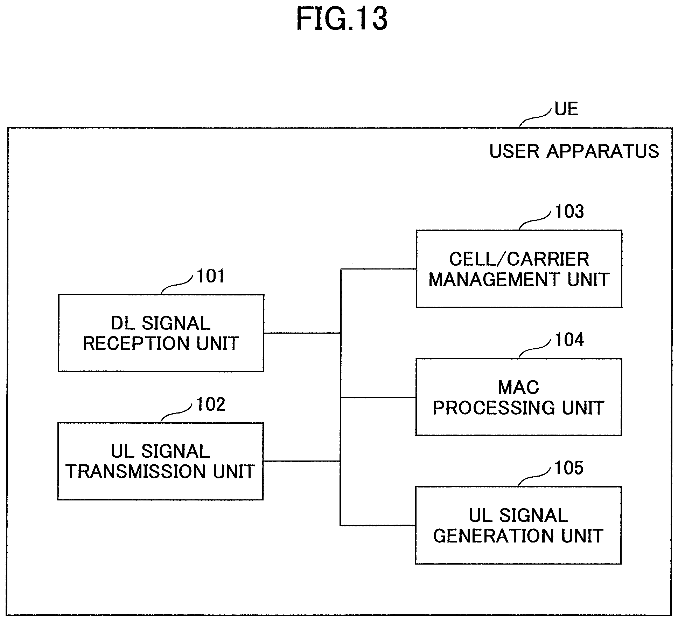

Fig. 13 shows a functional block diagram of the UE, in the present embodiment, that can execute processing described so far. As shown in Fig. 13, the UE includes a DL signal reception unit 101, an UL signal transmission unit 102, a cell/carrier management unit 103, a MAC processing unit 104 and an UL signal generation unit 105. Fig. 13 shows only functional units especially related to the embodiment of the present invention in the UE, and the UE includes functions not shown in the figure for at least performing operation complying with LTE. Also, the functional configuration shown in Fig. 13 is merely an example. Any functional segmentations and any names of functional units can be used as long as the UE can execute processing described in the present embodiment.

The DL signal reception unit 101 includes functions configured to receive various signals from the eNB, and obtain a signal of an upper layer from the received physical layer signals. The UL signal transmission unit 102 includes functions configured to transmit various signals of the physical layer by radio. Each of the DL signal reception unit 101 and the UL signal transmission unit 102 includes a function configured to perform CA for performing communication by bundling a plurality of CCs. Also, the DL signal reception unit 101 and the UL signal transmission unit 102 include functions configured to perform LBT. That is, the DL signal reception unit 101 monitors a signal, from another apparatus, that is received in a band of a carrier of an unlicensed band that is used for transmission by the UL signal transmission unit 102, measures received power, and prohibits the UL signal transmission unit 102 from transmitting by the carrier when the received power exceeds a predetermined threshold.

The cell/carrier management unit 103 holds information of a cell and a carrier (used by the UE) configured in the UE. These pieces of information are updated as needed by RRC signaling or other signaling and the like from the eNB. Also, the cell/carrier management unit 103 holds information of a cell or a carrier corresponding to a licensed band. The cell/carrier management unit 103 may hold information of a cell or a carrier corresponding to an unlicensed band instead of or in addition to information of a cell or a carrier corresponding to a licensed band.

Also, the cell/carrier management unit 103 includes a function configured to receive information of a cell or a carrier corresponding to a licensed band (or an unlicensed band) from the eNB and to hold it.

The MAC processing unit 104 includes a function configured to perform any one of, or a function configured to perform a plurality of, or a function configured to perform all of, the processing (example: procedure of Fig. 6) in the example 1, the processing (example: procedure of Fig. 7) in the example 2, the processing (example: procedure of Fig. 8) in the example 3, the processing (example: procedure of Fig. 9) in the example 4, and the processing of the modified example 1 and the modified example 2 (example: procedures of Fig. 10, Fig. 11 and Fig. 12). The UL signal generation unit 105 generates an UL transmission signal from a MAC PDU to which a MAC CE is mapped by the MAC processing unit 104, and passes the UL transmission signal to the UL signal transmission unit 102. Note that the functions of the MAC processing unit 104 and the UL signal generation unit 105 may be included in the UL signal transmission unit 102.

Also, the MAC processing unit 104 may include a determination unit configured to determine, based on assignment information, of an uplink transmission resource, received from the base station, whether a serving cell corresponding to the uplink transmission resource is a cell that uses a licensed spectrum or not; and the UL signal transmission unit 102 may include a transmission unit configured, if the serving cell is determined to be a cell that uses the licensed spectrum by the determination unit, to transmit a MAC control element to the base station by the serving cell.

Also, the MAC processing unit 104 may include a determination unit configured to determine, based on assignment information, of an uplink transmission resource, received from the base station, whether a serving cell corresponding to the uplink transmission resource is a cell in which a signaling radio bearer (SRB) can be transmitted or not; and the UL signal transmission unit 102 may include a transmission unit configured, if the serving cell is determined to be a cell in which a signaling radio bearer can be transmitted by the determination unit, to transmit a MAC control element to the base station by the serving cell.

Also, the UL signal transmission unit 102 may include a transmission unit configured, based on assignment information, of an uplink transmission resource, received from the base station, to transmit a MAC control element, on which a transmission trigger is performed, by using the uplink transmission resource; and the MAC processing unit 104 may include a determination unit configured to determine whether a serving cell corresponding to the uplink transmission resource is a cell that uses a licensed spectrum or not, and the transmission unit may not cancel the transmission trigger of the MAC control element if the serving cell is determined not to be a cell that uses the licensed spectrum by the determination unit.

Also, the UL signal transmission unit 102 may include a transmission unit configured, based on assignment information, of an uplink transmission resource, received from the base station, to transmit a MAC control element, on which a transmission trigger is performed, by using the uplink transmission resource; and the MAC processing unit 104 may include a determination unit configured to determine whether the MAC control element has been transmitted or not, and if it is determined that transmission of the MAC control element has not been performed by the determination unit, the transmission unit may not cancel the transmission trigger of the MAC control element.

The configuration of the user apparatus UE shown in Fig. 13 may be realized by hardware circuits (example: one or a plurality of IC chips) as a whole, or may be realized by hardware circuits for a part and by a CPU and a program for other parts.

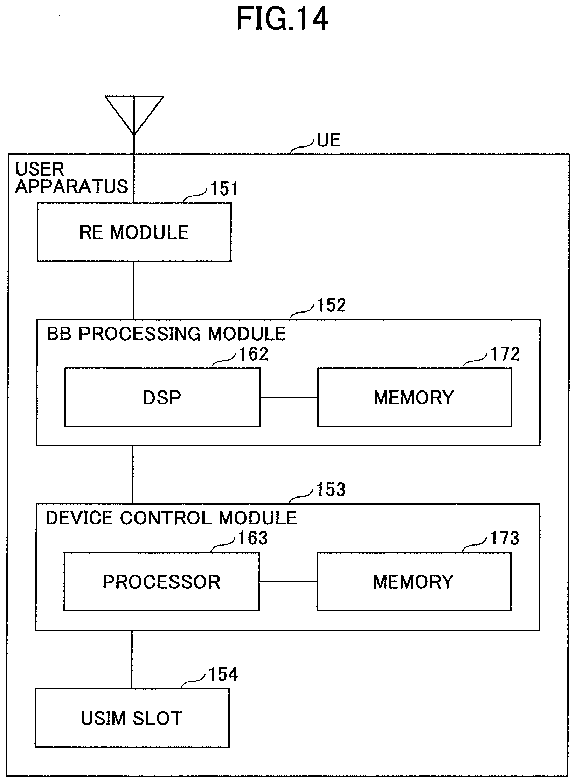

Fig. 14 is a diagram showing an example of a hardware (HW) configuration of the user apparatus UE. Fig. 14 shows a configuration closer to an implementation example than Fig. 13. As shown in Fig. 14, the UE includes an RE (Radio Equipment) module 151 for performing processing on radio signals, a BB (Base Band) processing module 152 for performing baseband signal processing, an device control module 153 for performing processes of upper layer and the like, and a USIM slot 154 that is an interface for accessing a USIM card.

The RE module 151 generates a radio signal that should be transmitted from an antenna by performing D/A (Digital-to-Analog) conversion, modulation, frequency conversion, and power amplifying and the like on a digital baseband signal received from the BB processing module 152. Also, the RE module 151 generates a digital baseband signal by performing frequency conversion, A/D (Analog to Digital) conversion, demodulation and the like on a received radio signal, so as to pass the signal to the BB processing module 152. The RE module 151 includes, for example, functions of physical layer and the like of the DL signal reception unit 101 and the UL signal transmission unit 102 of Fig. 13.

The BB processing module 152 performs processing for converting between IP packets and digital baseband signals. The DSP (Digital Signal Processor) 162 is a processor for performing signal processing in the BB processing module 152. The memory 172 is used as a work area of the DSP 162. The BB processing module 152 may include, for example, functions of layer 2 and the like of the DL signal reception unit 101 and the UL signal transmission unit 102, the cell/carrier management unit 103, the MAC processing unit 104, and the UL signal generation unit 105. All of or a part of functions of the cell/carrier management unit 103, the MAC processing unit 104, and the UL signal generation unit 105 may be included in the device control module 153.

The device control module 153 performs protocol processing of IP layer, processing of various applications, and the like. The processor 163 is a processor for performing processes performed by the device control module 153. The memory 173 is used as a work area of the processor 163. The processor 163 performs read and write of data with a USIM via the USIM slot 154.

As described above, according to the present embodiment, there is provided a user apparatus that communicates with a base station in a mobile communication system that supports uplink carrier aggregation, including:
determination means configured to determine, based on assignment information, of an uplink transmission resource, received from the base station, whether a serving cell corresponding to the uplink transmission resource is a cell that uses a licensed spectrum or not; and
transmission means configured, if the serving cell is determined to be a cell that uses the licensed spectrum by the determination means, to transmit a MAC control element to the base station by the serving cell.

According to the above configuration, delay of transmission of a MAC CE in the user apparatus can be avoided in the case where uplink carrier aggregation formed by a plurality of cells including a cell using an unlicensed spectrum is executed.

The transmission means may determine whether the MAC control element is a specific type of MAC control element or not, and, if the MAC control element is the specific type of MAC control element and the serving cell is determined to be a cell that uses the licensed spectrum by the determination means, the transmission means may transmit the MAC control element by the serving cell. According to this configuration, control can be realized for permitting transmission of a MAC CE which is relatively unimportant by an unlicensed band.

The determination means may determine whether the serving cell is a cell that uses the licensed spectrum by determining whether the serving cell corresponding to the uplink transmission resource is a cell in which a signaling radio bearer can be transmitted or not. According to this configuration, in the case where a cell in which a signaling radio bearer can be transmitted is a cell using a licensed spectrum, determination can be properly performed.

The transmission means may transmit the MAC control element by the serving cell when a predetermined period elapses without the MAC control element being transmitted even if the serving cell on which determination is performed by the determination means is not a cell that uses the licensed spectrum. According to this configuration, a MAC CE can be transmitted to the base station even in a situation where transmission by a cell using a licensed spectrum cannot be performed.

Also, the user apparatus in the present embodiment may be configured as a user apparatus that communicates with a base station in a mobile communication system that supports uplink carrier aggregation, including:
determination means configured to determine, based on assignment information, of an uplink transmission resource, received from the base station, whether a serving cell corresponding to the uplink transmission resource is a cell in which a signaling radio bearer can be transmitted or not; and
transmission means configured, if the serving cell is determined to be a cell in which a signaling radio bearer can be transmitted by the determination means, to transmit a MAC control element to the base station by the serving cell.

According to the above configuration, delay of transmission of a MAC CE in the user apparatus can be avoided in the case where uplink carrier aggregation formed by a plurality of cells including a cell using an unlicensed spectrum is executed.

Also, the user apparatus in the present embodiment may be configured as a user apparatus that communicates with a base station in a mobile communication system that supports uplink carrier aggregation, including:
transmission means configured, based on assignment information, of an uplink transmission resource, received from the base station, to transmit a MAC control element, on which a transmission trigger is performed, by using the uplink transmission resource; and
determination means configured to determine whether a serving cell corresponding to the uplink transmission resource is a cell that uses a licensed spectrum or not,
wherein the transmission means does not cancel the transmission trigger of the MAC control element if the serving cell is determined not to be a cell that uses the licensed spectrum by the determination means.

According to the above configuration, delay of transmission of a MAC CE in the user apparatus can be avoided in the case where uplink carrier aggregation formed by a plurality of cells including a cell using an unlicensed spectrum is executed.

The MAC control element may be a MAC control element for transmitting a periodic BSR, and if the serving cell is determined not to be a cell that uses the licensed spectrum, the transmission means may regard that a periodic BSR timer has expired. According to this configuration, even if transmission by an unlicensed band cannot be performed due to LBT=busy, trigger cancelling can be avoided by regarding that the periodic BSR timer has expired, so that, for example, the MAC CE can be transmitted by next resource assignment of a licensed band.

The MAC control element may be a MAC control element for transmitting a PHR, and if the serving cell is determined not to be a cell that uses the licensed spectrum, the transmission means may not start or restart a prohibit timer for prohibiting transmission of the PHR. According to this configuration, even if transmission by an unlicensed band cannot be performed due to LBT=busy, trigger cancelling can be avoided by not starting or restarting the prohibit timer, so that, for example, the MAC CE can be transmitted by next resource assignment of a licensed band.

Also, the user apparatus in the present embodiment may be configured as a user apparatus that communicates with a base station in a mobile communication system that supports uplink carrier aggregation, including:
transmission means configured, based on assignment information, of an uplink transmission resource, received from the base station, to transmit a MAC control element, on which a transmission trigger is performed, by using the uplink transmission resource; and
determination means configured to determine whether the MAC control element has been transmitted or not,
wherein, if it is determined that transmission of the MAC control element has not been performed by the determination means, the transmission means does not cancel the transmission trigger of the MAC control element.

According to the above configuration, delay of transmission of a MAC CE in the user apparatus can be avoided in the case where uplink carrier aggregation formed by a plurality of cells including a cell using an unlicensed spectrum is executed.

The UE described in the embodiment of the present invention may include a CPU and a memory, and may be realized by executing a program by the CPU (processor), or may be realized by hardware such as hardware circuits including logics of processing described in the embodiment, or may be configured by coexistence of a program and hardware.

The eNB described in the embodiment of the present invention may include a CPU and a memory, and may be realized by executing a program by the CPU (processor), or may be realized by hardware such as hardware circuits including logics of processing described in the present embodiment, or may be configured by coexistence of a program and hardware.

In the above, the embodiment of the present invention has been explained. However, the disclosed invention is not limited to the embodiment. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus and the base station have been explained by using functional block diagrams. However, such an apparatus may be implemented in hardware, software, or a combination thereof.

The software executed by a processor provided in the UE according to an embodiment of the present invention and the software executed by a processor provided in the eNB may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the spirit of the present invention.

The present patent application claims priority based on Japanese patent application No. 2015-100562, filed in the JPO on May 15, 2015, and the entire contents of the Japanese patent application No. 2015-100562 are incorporated herein by reference.

### DESCRIPTION OF REFERENCE SIGNS

UE user apparatus
eNB base station
101 DL signal reception unit
102 UL signal transmission unit
103 cell/carrier management unit
104 MAC processing unit
105 UL signal generation unit
151 RE module
152 BB processing module
153 device control module
154 USIM slot

## Claims

1. A user apparatus that communicates with a base station in a mobile communication system that supports uplink carrier aggregation, comprising:
determination means configured to determine, based on assignment information, of an uplink transmission resource, received from the base station, whether a serving cell corresponding to the uplink transmission resource is a cell that uses a licensed spectrum or not; and
transmission means configured, if the serving cell is determined to be a cell that uses the licensed spectrum by the determination means, to transmit a MAC control element to the base station by the serving cell.

2. The user apparatus as claimed in claim 1, wherein the transmission means determines whether the MAC control element is a specific type of MAC control element or not, and, if the MAC control element is the specific type of MAC control element and the serving cell is determined to be a cell that uses the licensed spectrum by the determination means, the transmission means transmits the MAC control element by the serving cell.

3. The user apparatus as claimed in claim 1 or 2, wherein the determination means determines whether the serving cell is a cell that uses the licensed spectrum by determining whether the serving cell corresponding to the uplink transmission resource is a cell in which a signaling radio bearer can be transmitted or not.

4. The user apparatus as claimed in any one of claims 1-3, wherein the transmission means transmits the MAC control element by the serving cell when a predetermined period elapses without the MAC control element being transmitted even if the serving cell on which determination is performed by the determination means is not a cell that uses the licensed spectrum.

5. A user apparatus that communicates with a base station in a mobile communication system that supports uplink carrier aggregation, comprising:
determination means configured to determine, based on assignment information, of an uplink transmission resource, received from the base station, whether a serving cell corresponding to the uplink transmission resource is a cell in which a signaling radio bearer can be transmitted or not; and
transmission means configured, if the serving cell is determined to be a cell in which a signaling radio bearer can be transmitted by the determination means, to transmit a MAC control element to the base station by the serving cell.

6. A user apparatus that communicates with a base station in a mobile communication system that supports uplink carrier aggregation, comprising:
transmission means configured, based on assignment information, of an uplink transmission resource, received from the base station, to transmit a MAC control element, on which a transmission trigger is performed, by using the uplink transmission resource; and
determination means configured to determine whether a serving cell corresponding to the uplink transmission resource is a cell that uses a licensed spectrum or not,
wherein the transmission means does not cancel the transmission trigger of the MAC control element if the serving cell is determined not to be a cell that uses the licensed spectrum by the determination means.

7. The user apparatus as claimed in claim 6, wherein, the MAC control element is a MAC control element for transmitting a periodic BSR, and
if the serving cell is determined not to be a cell that uses the licensed spectrum by the determination means, the transmission means regards that a periodic BSR timer has expired.

8. The user apparatus as claimed in claim 6, wherein, the MAC control element is a MAC control element for transmitting a PHR, and
if the serving cell is determined not to be a cell that uses the licensed spectrum by the determination means, the transmission means does not start or restart a prohibit timer for prohibiting transmission of the PHR.

9. A user apparatus that communicates with a base station in a mobile communication system that supports uplink carrier aggregation, comprising:
transmission means configured, based on assignment information, of an uplink transmission resource, received from the base station, to transmit a MAC control element, on which a transmission trigger is performed, by using the uplink transmission resource; and
determination means configured to determine whether the MAC control element has been transmitted or not,
wherein, if it is determined that transmission of the MAC control element has not been performed by the determination means, the transmission means does not cancel the transmission trigger of the MAC control element.

10. A MAC control element transmission method executed by a user apparatus that communicates with a base station in a mobile communication system that supports uplink carrier aggregation, comprising:
determining, based on assignment information, of an uplink transmission resource, received from the base station, whether a serving cell corresponding to the uplink transmission resource is a cell that uses a licensed spectrum or not; and
transmitting a MAC control element to the base station by the serving cell if the serving cell is determined to be a cell that uses the licensed spectrum.
